# FASCICULE DE BREVET EUROPEEN

(11) **EP 1 481 840 B1**
(45) Date de publication et mention de la délivrance du brevet: **22.11.2006**
(21) Numéro de dépôt: 04290962.2
(22) Date de dépôt: 09.04.2004
(51) Int. Cl.: B60N 2/30

(54) **Véhicule automobile avec un siège basculant compact**
Kraftfahrzeug mit einem kompakt kippbaren Sitz
Automotive vehicle with a compact tilting seat

(30) Priorité: 26.05.2003 FR 0306326
(43) Date de publication de la demande: 01.12.2004
(73) Titulaire: Peugeot Citroën Automobiles S.A., 78140 Vélizy Villacoublay (FR)
(72) Inventeur: Marcuzzi, Jean-Charles, 95100 Argenteuil (FR)
(74) Mandataire: Thinat, Michel

(56) Documents cités:
- EP-A- 0 207 267
- WO-A-02/101163
- DE-C- 19 918 019
- FR-A- 622 621
- FR-A- 2 546 455
- US-A- 4 771 507

## Description

L'invention concerne en général les véhicules automobiles, notamment les véhicules utilitaires légers.

Plus précisément, l'invention concerne un véhicule automobile comprenant un siège muni d'un dossier disposé normalement dans une position d'utilisation verticale ou proche de la verticale, d'une assise montée pivotante par rapport au dossier autour d'un axe de pivotement transversal, et de moyens d'actionnement de l'assise en rotation autour de l'axe de pivotement. Un véhicule de ce type est connu du document US-A- 4 771 507.

Des véhicules de ce type sont en outre également connus de l'art antérieur, les moyens d'actionnement de l'assise comprenant typiquement deux ressorts en spirales disposés latéralement des deux côtés opposés du siège, qui sollicitent l'assise vers sa position escamotée.

Ces ressorts sont encombrants et, quand le dossier est escamotable dans le plancher du véhicule, sont gênants pour le débattement du dossier.

Dans ce contexte, la présente invention a pour but de pallier les défauts mentionnés ci-dessus.

A cette fin, le véhicule de l'invention, par ailleurs conforme à la définition générique qu'en donne le préambule ci-dessus, est essentiellement caractérisé en ce que les moyens d'actionnement comprennent un organe d'actionnement monté pivotant sur l'assise autour d'un axe d'articulation d'assise transversal, l'organe d'actionnement étant monté pivotant par rapport au dossier autour d'un axe d'articulation de dossier transversal et monté coulissant par rapport à ce dossier.

Dans un mode de réalisation possible de l'invention, le dossier comprend au moins une lumière de forme allongée, l'axe d'articulation de dossier étant coulissant dans cette lumière.

Avantageusement, l'assise est mobile en rotation autour de l'axe de pivotement entre une position déployée relativement plus écartée du dossier et une position escamotée relativement plus proche du dossier, l'axe d'articulation de dossier étant en butée à une première extrémité de la lumière quand l'assise adopte sa position déployée, et occupant une seconde extrémité de la lumière quand l'assise adopte sa position escamotée.

De préférence, le dossier comprend au moins une tige d'armature, verticale ou légèrement inclinée par rapport à la verticale quand le dossier est en position normale, la lumière étant ménagée dans la tige et s'étendant suivant la direction longitudinale de la tige.

Par exemple, la première extrémité de la lumière est relativement au-dessus de la seconde extrémité.

Avantageusement, quand l'assise est dans sa position déployée, l'axe d'articulation d'assise est situé relativement plus bas et relativement plus proche de la lumière que l'axe de pivotement.

De préférence, l'organe d'actionnement est une plaque mince, transversale, rigide.

Par exemple, la plaque comprend une partie arrière transversale et une partie avant transversale solidaire de la partie arrière, la partie arrière s'étendant parallèlement à la tige d'armature dans la position déployée de l'assise.

Avantageusement, les parties avant et arrière forment mutuellement un angle tel que la partie avant s'étend parallèlement à une face arrière de l'assise quand celle-ci est en position escamotée.

De préférence, les moyens d'actionnement comprennent un organe d'assistance au mouvement de pivotement de l'assise de sa position déployée à sa position escamotée.

Par exemple, le siège comprend un organe amovible d'ancrage de l'assise en position déployée sur la structure du véhicule.

Avantageusement, le dossier est mobile entre sa position normale d'utilisation et une position de rangement dans le plancher du véhicule.

D'autres caractéristiques et avantages de l'invention ressortiront clairement de la description qui en est faite ci-dessous, à titre indicatif et nullement limitatif, en référence aux figures annexées, parmi lesquelles :
- la figure 1 est une vue en perspective du siège d'un véhicule selon l'invention, l'assise occupant sa position déployée, les tiges d'armature du dossier n'étant pas représentées,
- la figure 2 est une vue similaire à la figure 1, l'assise occupant sa position escamotée,
- la figure 3 est une vue partielle en coupe suivant les flèches III de la figure 1, le plancher du véhicule étant également représenté, le siège étant représenté en traits mixtes en position de rangement du dossier,
- la figure 4 est une vue similaire à la figure 3, le dossier étant représenté en position normale et l'assise en position escamotée.

Le véhicule automobile de l'invention est du type comprenant un siège 1 muni d'un dossier transversal 10 disposé normalement dans une position d'utilisation verticale ou légèrement inclinée vers l'arrière par rapport à la verticale, d'une assise 20 transversale montée pivotante par rapport au dossier 10 autour d'un axe de pivotement 30 transversal, et de moyens 40 d'actionnement de l'assise en rotation autour de l'axe de pivotement 30.

L'assise 20 présente une forme sensiblement parallélépipédique, délimitée par des faces supérieure et inférieure transversales opposées 21 et 22, des faces avant et arrière opposées 23 et 24, et des faces latérales.

Cette assise 20 est mobile en rotation autour de l'axe de pivotement 30 entre une position déployée relativement plus écartée du dossier 10, dans laquelle l'assise 20 s'étend sensiblement horizontalement, et une position escamotée relativement plus proche du dossier 10, dans laquelle l'assise 20 est plaquée contre un côté avant 13 du dossier 10.

Dans la position déployée de l'assise 20, les faces supérieure et inférieure 21 et 22 sont respectivement tournées vers le haut et le bas et des faces avant et arrière 23 et 24 respectivement vers l'avant et l'arrière du véhicule.

L'axe de pivotement 30 est relativement plus proche de la face arrière 24 que de la face avant 23, et s'étend sensiblement à mi-distance des faces supérieure et inférieure 21 et 22. Il s'étend à proximité d'un bord inférieur 14 du dossier 10.

L'assise 10 passe de sa position déployée à sa position escamotée par pivotement vers l'avant et vers le haut, de telle sorte que la face supérieure 21 de l'assise 20 vient se plaquer contre le côté avant 13 du dossier 10.

Selon l'invention, les moyens d'actionnement 40 comprennent un organe d'actionnement 41 monté pivotant sur l'assise 20 autour d'un axe d'articulation d'assise 42 transversal, l'organe d'actionnement 41 étant également monté pivotant par rapport au dossier 10 autour d'un axe d'articulation de dossier 43 transversal et monté coulissant par rapport à ce dossier 10.

Le dossier 10 comprend au moins une tige d'armature 12, et un coussin 15 fixé à la tige d'armature 12. Généralement, le dossier comprend deux tiges d'armatures 12, droites et mutuellement parallèles, s'étendant verticalement ou présentant une légère inclinaison vers l'arrière identique à l'inclinaison du dossier 10.

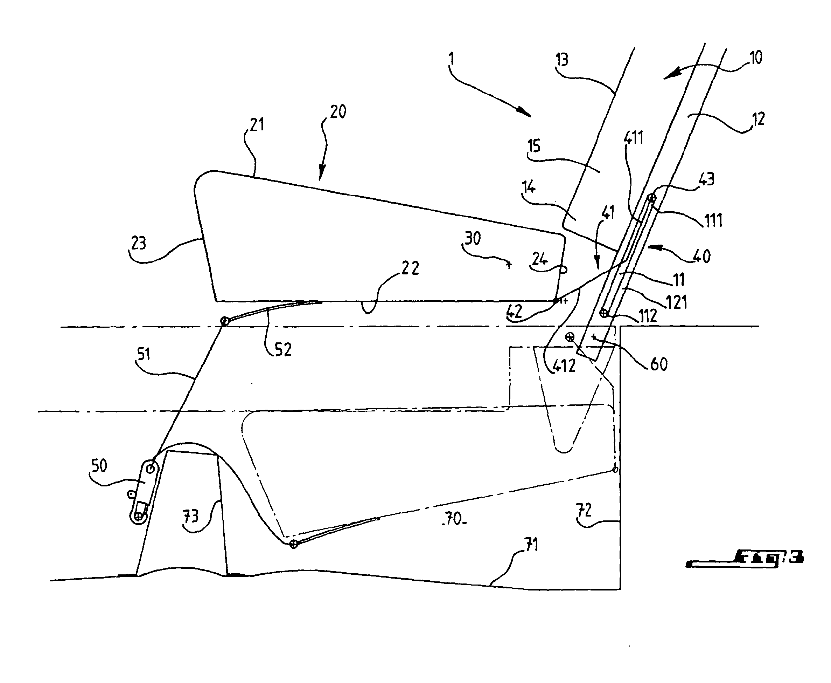

Comme le montre la figure 3, ces tiges 12 présentent des parties inférieures 121 respectives faisant saillie vers le bas relativement au coussin 15 dans la position normale du dossier 10.

Des lumières 11 de formes allongées sont ménagées dans les tiges d'armatures 12, et s'étendent suivant la direction longitudinale de ces tiges 12. Elles sont ménagées au moins en partiellement dans les parties inférieures 121 des tiges 12.

L'organe d'actionnement 41 comprend deux ergots 413 alignés transversalement, engagés dans les deux lumières 11 et coulissant librement dans celles-ci. Ces deux ergots constituent l'axe d'articulation de dossier 43.

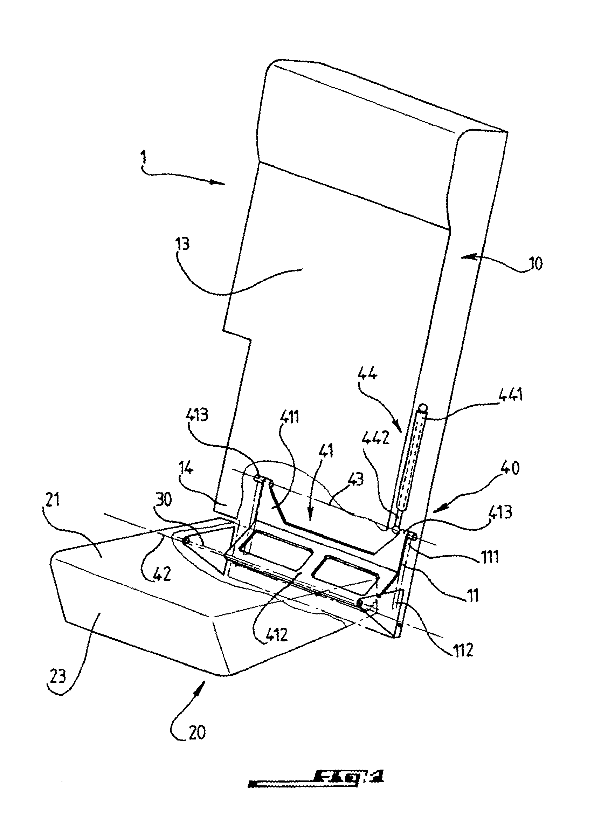

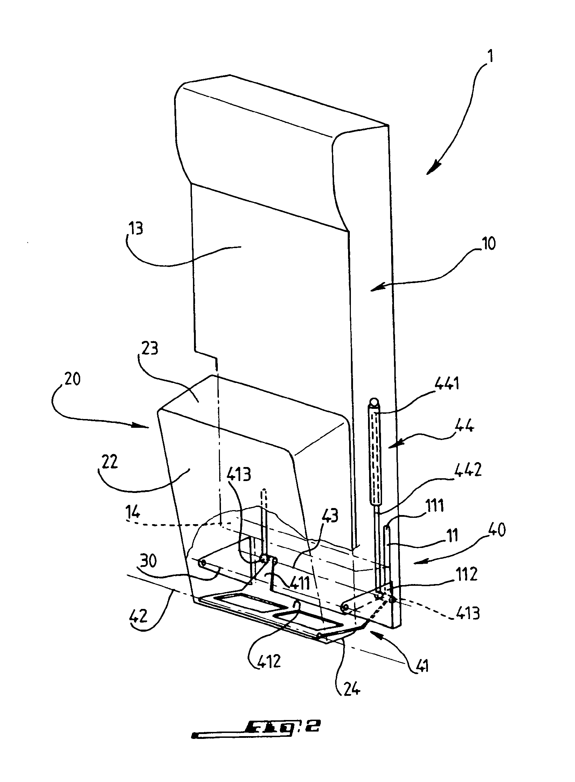

On voit sur les figures 1 et 2 que les ergots 413 sont en butée à une première extrémité 111 de la lumière 11 quand l'assise 20 adopte sa position d'utilisation, et occupant une seconde extrémité 112 de la lumière 11 quand l'assise 20 adopte sa position escamotée.

La première extrémité 111 de la lumière 11 est relativement au-dessus de la seconde extrémité 112.

Plus précisément, la première extrémité 111 est située relativement plus haut que l'axe de pivotement 30, et la seconde extrémité 112 est située relativement moins haut que l'axe de pivotement 30.

Par ailleurs, quand l'assise 20 est dans sa position déployée, l'axe d'articulation d'assise 42 est situé relativement plus bas et relativement plus proche de la lumière 11 que l'axe de pivotement 30.

Dans un mode de réalisation préféré, l'axe d'articulation d'assise 42 s'étend transversalement, à l'angle entre la face arrière 24 et la face inférieure 22 de l'assise 20.

L'organe d'actionnement 41 est une plaque mince relativement à l'épaisseur de l'assise et du dossier, transversale, et rigide. Elle est métallique ou réalisée en matière plastique dure.

Cette plaque 41 comprend une partie arrière 411 transversale et une partie avant 412 transversale solidaire de la partie arrière 411.

La partie arrière 411 présente une forme générale rectangulaire, délimitée par un premier bord transversal par lequel la partie arrière 411 est solidaire de la partie avant 412, un second bord transversal opposé au premier portant les ergots 413, et deux bords latéraux opposés. Les ergots 413 font saillie par rapport aux bords latéraux de la partie arrière. Le second bord transversal porte une large échancrure, découpant le centre de la partie arrière 411, et définissant avec les bords latéraux deux parties triangulaires latérales dont les ergots 413 occupent les sommets.

Dans la position déployée de l'assise 20, représentée sur la figure 1, la partie arrière 411 s'étend entre les deux tiges d'armatures 12, parallèlement à celles-ci.

Les ergots 413 sont rigidement fixés à la partie arrière 411. Les lumières 11 sont droites et de largeurs correspondant aux diamètres des ergots 413, de telle sorte que ceux-ci sont libres en rotation dans les lumières 11 et guidés en translation le long de celles-ci.

La partie avant 412 présente elle aussi une forme générale rectangulaire, délimitée par un bord transversal de fixation sur la partie arrière 411, un bord transversal d'articulation sur l'assise opposé au bord de fixation, et deux bords latéraux opposés.

Le centre de la partie avant 411 peut être évidé, totalement ou partiellement, pour alléger la plaque 41.

Les parties avant 412 et arrière 411 s'étendent dans des plans décalés angulairement, la position angulaire de la partie avant 412 se déduisant de celle de la partie arrière 411 par rotation vers l'avant d'un angle obtus autour de leur côté commun.

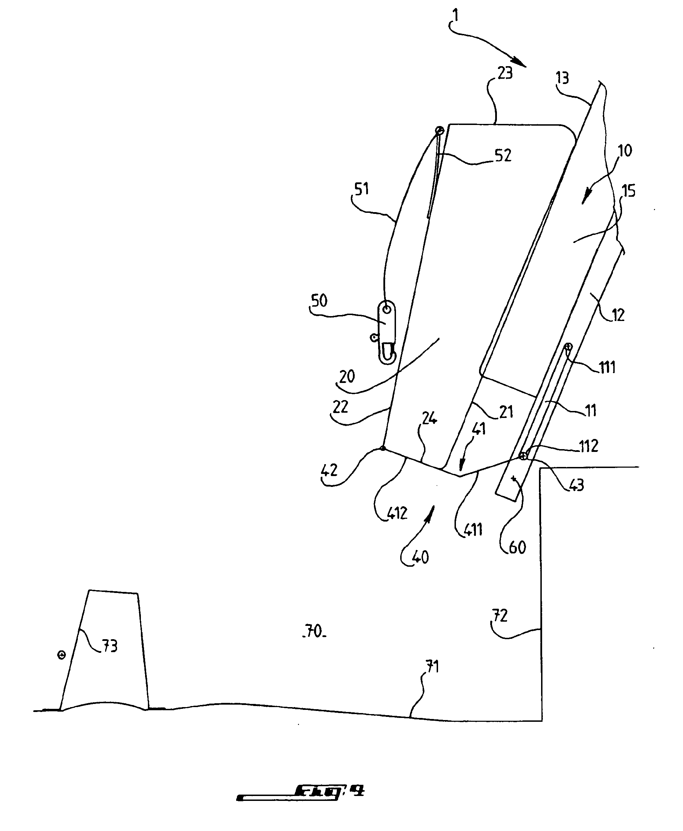

L'angle formé par les parties avant et arrière 412 et 411 est choisi tel que la partie avant 412 s'étend parallèlement à la face arrière 24 de l'assise 20 quand celle-ci est en position escamotée, comme le montre la figure 4.

L'axe de pivotement 30 est monté entre deux flasques fixés sur les tiges d'armature 12.

Les moyens d'actionnement 40 comprennent un organe 44 d'assistance au mouvement de pivotement de l'assise 20 de sa position déployée à sa position escamotée.

Cet organe est typiquement un piston à gaz, comprenant le corps 441 rigidement fixé sur une des tiges d'armature 12, et un piston 442 mobile dans le corps 441 et articulé à une extrémité opposée au corps 441 sur l'ergot 413 correspondant à ladite tige 12.

Le piston à gaz 41 s'étend suivant une direction parallèle à ladite tige 12, et le piston 442 sollicite l'ergot 413 en translation dans la lumière 11 vers la seconde extrémité 112.

Le piston à gaz 41 est en général disposé à l'intérieur du dossier 10.

Le siège peut comprendre deux pistons à gaz 41 fixés chacun à une tige d'armature 12. Le vérin à gaz peut également être remplacé par un ressort de compression ou de traction.

Le siège comprend un organe 50 amovible d'ancrage de l'assise 20 en position déployée sur la structure du véhicule.

Cet organe est typiquement un mousqueton qui peut être manuellement engagé ou dégagé d'un anneau fixé sur un élément de structure du véhicule situé sous le siège.

Ce mousqueton est relié par un câble de verrouillage 51 à un ressort à lame 52 fixé sur la face inférieure 22 de l'assise 20.

Le dossier 10 est mobile par rapport à la structure du véhicule en rotation autour d'un axe de rotation 60 transversal, entre sa position normale d'utilisation et une position de rangement dans le plancher du véhicule.

Dans sa position de rangement, le dossier 10 est disposé à l'intérieur d'un logement 70 ménagé dans le plancher, présentant une ouverture d'un côté supérieur et délimité par un fond 71 et, vers l'arrière, par une planche à talon 72 transversale.

L'axe de rotation 60 est disposé à l'intérieur du logement 70, légèrement en dessous de l'ouverture et à proximité de la planche à talon 72.

Le dossier 10 passe de sa position normale à sa position de rangement par basculement vers l'avant, et s'étend dans un plan pratiquement horizontal en position de rangement. Bien entendu, le basculement du dossier 10 ne peut être réalisé que quand l'assise est en position escamotée, l'assise se trouvant alors sous le dossier quand celui-ci est dans sa position de rangement.

On notera que le fond 71 du logement 70 porte une nervure 72 transversale à laquelle le mousqueton 50 peut commodément être ancré.

On va maintenant détailler le fonctionnement du siège qui a été décrit ci-dessus.

Quand le dossier 10 est en position normale et l'assise 20 en position déployée, les ergots 413 occupent la première extrémité 111 de la lumière 11.

Si un utilisateur s'assoit sur l'assise 20, celle-ci est sollicitée par le poids de l'utilisateur en rotation vers le bas autour de l'axe de pivotement 30. Ce mouvement est bloqué par les ergots 413 venant en butée aux premières extrémités 111 des lumières 11.

Quand l'utilisateur se relève, le vérin 41 sollicite l'assise 20 en rotation en sens inverse autour de l'axe 30, c'est-à-dire vers sa position escamotée. Ce mouvement est bloqué par l'organe d'ancrage 50, qui, par l'intermédiaire du câble 51, limite la rotation de l'assise vers le haut. Il est à noter que le ressort à lame 52 permet de rattraper les jeux.

L'assise 20 peut être ramenée dans sa position escamotée en décrochant l'organe d'ancrage 50. L'assise bascule alors autour de l'axe de pivotement 30 sous la contrainte du piston à gaz 44. Les ergots 413 coulissent le long des lumières 11 jusqu'aux deuxièmes extrémités 112, ce mouvement s'accompagnant d'un pivotement de la plaque 41 à la fois par rapport au dossier 10 et par rapport à l'assise 20.

Comme le montre la figure 4, en position escamotée de l'assise 20, la partie avant 412 de la plaque 41 est plaquée contre la face arrière 24 de l'assise 20, et cette face arrière 24 s'étend dans le même plan que l'extrémité libre des tiges d'armature 12.

Enfin, le dossier 10 peut être rabattu dans le logement 70 par basculement autour de l'axe de rotation 60. On voit sur la figure 3 que le jeu entre la face arrière 24 de l'assise 20 et la planche à talon 72 est extrêmement réduit.

On comprend donc bien que l'invention présente de nombreux avantages. La plaque 41 est disposée entre les tiges d'armature 12. Ces tiges sont généralement disposées à l'intérieur du coussin 15 du dossier, ou derrière celui-ci. La plaque 41 ne présente donc aucun encombrement latéral.

Quand les tiges 12 s'étendent à l'intérieur des coussins 15, la partie arrière 411 de la plaque 41 pénètre partiellement dans le coussin 15 en position déployée de l'assise 20. Il faut donc prévoir dans le coussin un évidement permettant le débattement de la plaque 41.

Comme la partie arrière 411 s'étend, dans la position déployée de l'assise, parallèlement aux tiges d'armature 12, c'est-à-dire dans le même plan que le dossier, l'évidement peut être ménagé dans le dossier tout en préservant une épaisseur de mousse suffisante entre le côté avant du dossier et l'évidement. Le confort de l'utilisateur est ainsi assuré.

Par ailleurs, la plaque 41 est très plate. Elle n'occupe donc que très peu d'épaisseur dans le dossier, ce qui permet d'augmenter l'épaisseur de mousse et le confort des passagers. Elle ne pénètre pas dans l'épaisseur de l'assise, et ne réduit donc pas l'épaisseur de mousse de l'assise.

On notera encore que la plaque 41 est essentiellement disposée sous le coussin 15 du dossier 10 et derrière l'assise 20.

Elle peut s'étendre sur seulement une fraction de la largeur transversale du siège ou sur pratiquement toute sa largeur.

Les moyens d'actionnement de l'assise sont donc remarquablement compacts, et leur disposition facilite l'agencement du siège à l'intérieur du véhicule.

Enfin, la forme de la plaque 41 permet de réduire au minimum le jeu entre l'assise et la planche à talon quand le dossier est en position de rangement, ce qui permet de gagner de la place à bord du véhicule.

Dans une variante de réalisation non représentée, la partie arrière 411 de la plaque 41 peut être divisée en deux segments transversaux : un premier segment monté coulissant mais pas pivotant dans les lumières 11, et un second segment articulé par rapport au premier autour d'un axe, cet axe constituant l'axe d'articulation de dossier 43.

Il est possible d'obtenir une cinématique proche de celle qui est décrite ci-dessus d'une multitude de manières, en faisant varier les positions respectives des axes de pivotement et d'articulation d'assise et de dossier, la forme de la plaque, la longueur et l'inclinaison des lumières. Toutes ces variantes entrent bien entendu dans le cadre de l'invention.

## Revendications

1. Véhicule automobile comprenant un siège (1) muni d'un dossier (10) disposé normalement dans une position d'utilisation verticale ou proche de la verticale, d'une assise (20) montée pivotante par rapport au dossier (10) autour d'un axe de pivotement (30) transversal, et de moyens d'actionnement (40) de l'assise en rotation autour de l'axe de pivotement (30), **caractérisé en ce que** les moyens d'actionnement (40) comprennent un organe d'actionnement (41) monté pivotant sur l'assise (20) autour d'un axe d'articulation d'assise (42) transversal , l'organe d'actionnement (41) étant monté pivotant par rapport au dossier (10) autour d'un axe d'articulation de dossier (43) transversal et monté coulissant par rapport à ce dossier, le dossier (10) comprenant au moins une lumière (11) de forme allongée, l'axe d'articulation de dossier (43) étant coulissant dans cette lumière (11), et **en ce que**, quand l'assise (20) est dans sa position déployée, l'axe d'articulation d'assise (42) est situé relativement plus bas et relativement plus proche de la lumière (11) que l'axe de pivotement (30).

2. Véhicule automobile selon la revendication 1, **caractérisé en ce que** l'assise (20) est mobile en rotation autour de l'axe de pivotement (30) entre une position déployée relativement plus écartée du dossier (10) et une position escamotée relativement plus proche du dossier (10), l'axe d'articulation de dossier (43) étant en butée à une première extrémité (111) de la lumière (11) quand l'assise (20) adopte sa position déployée, et occupant une seconde extrémité (112) de la lumière (11) quand l'assise (20) adopte sa position escamotée.

3. Véhicule automobile selon la revendication 2, **caractérisé en ce que** le dossier (10) comprend au moins une tige d'armature (12), verticale ou légèrement inclinée par rapport à la verticale quand le dossier (10) est en position normale, la lumière (11) étant ménagée dans la tige (12) et s'étendant suivant la direction longitudinale de la tige (12).

4. Véhicule automobile selon la revendication 3, **caractérisé en ce que** la première extrémité (111) de la lumière (11) est relativement au-dessus de la seconde extrémité (112).

5. Véhicule automobile selon l'une quelconque des revendications 2 à 4, **caractérisé en ce que** l'organe d'actionnement (41) est une plaque mince, transversale, rigide.

6. Véhicule automobile selon la revendication 5, **caractérisé en ce que** la plaque (41) comprend une partie arrière transversale (411) et une partie avant transversale (412) solidaire de la partie arrière (411), la partie arrière (411) s'étendant parallèlement à la tige d'armature (12) dans la position déployée de l'assise (20).

7. Véhicule automobile selon la revendication 6, **caractérisé en ce que** les parties avant et arrière (412, 411) forment mutuellement un angle tel que la partie avant (412) s'étend parallèlement à une face arrière (24) de l'assise (20) quand celle-ci est en position escamotée.

8. Véhicule automobile selon l'une quelconque des revendications 2 à 7, **caractérisé en ce que** les moyens d'actionnement (40) comprennent un organe (44) d'assistance au mouvement de pivotement de l'assise (20) de sa position déployée à sa position escamotée.

9. Véhicule automobile selon l'une quelconque des revendications 2 à 8, **caractérisé en ce que** le siège (1) comprend un organe amovible (50) d'ancrage de l'assise (20) en position déployée sur la structure du véhicule.

10. Véhicule automobile selon l'une quelconque des revendications précédentes, **caractérisé en ce que** le dossier (10) est mobile entre sa position normale d'utilisation et une position de rangement dans le plancher du véhicule.

## Claims

1. Motor vehicle comprising a seat (1) provided with a seat back (10), normally arranged in a position for vertical or near-vertical use, with a seating surface (20) pivot-mounted with respect to the seat back (10) about a transverse pivot pin (30), and with actuating means (40) to rotate the seating surface about the pivot pin (30), **characterized in that** the actuating means (40) comprise an actuator member (41) pivot mounted on the seating surface (20) about a transverse, seating surface hinge pin (42), the actuator member (41) being pivot mounted with respect to the seat back (10) about a transverse, seat back hinge pin (43) and mounted slidingly with respect to this seat back, the seat back (10) comprising at least one lumen (11) of elongate shape, the seat back hinge pin (43) sliding within this lumen (11), and **in that** when the seating surface is in deployed position, the seating surface hinge pin (42) is located relatively lower and relatively closer to the lumen (11) than the pivot pin (30).

2. Motor vehicle as in claim 1, **characterized in that** the seating surface (20) is mobile in rotation about the pivot pin (30) between a deployed position relatively further distant from the seat back (10), and a retracted position relatively closer to the seat back (10), the seat back hinge pin (43) abutting a first end (111) of the lumen (11) when the seating surface (20) takes up its deployed position, and occupying a second end (112) of the lumen (11) when the seating surface (20) takes up its retracted position.

3. Motor vehicle as in claim 2, **characterized in that** the seat back (10) comprises at least one reinforcement rod (12), either vertical or slightly inclined with respect to the vertical when the seat back (10) is in normal position, the lumen (11) being arranged in the rod (12) and extending along the longitudinal direction of the rod (12).

4. Motor vehicle as in claim 3, **characterized in that** the first end (111) of the lumen (11) lies relatively above the second end (112).

5. Motor vehicle as in any of claims 2 to 4, **characterized in that** the actuator member (41) is a thin, rigid, cross plate.

6. Motor vehicle as in claim 5, **characterized in that** the plate (41) comprises a rear transverse part (411) and a front transverse part (412) joined to the rear part (411), the rear part (411) extending parallel to the reinforcement rod (12) in the deployed position of the seating surface (20).

7. Motor vehicle as in claim 6, **characterized in that** the front and rear parts (412, 411) mutually form an angle such that the front part (412) extends parallel to a rear face (24) of the seating surface (20) when the latter is in retracted position.

8. Motor vehicle as in any of claims 2 to 7, **characterized in that** the actuating means (40) comprise a member (44) to assist the pivot movement of the seating surface (20) from its deployed position to its retracted position.

9. Motor vehicle as in any of claims 2 to 8, **characterized in that** the seat (1) comprises a removable member (50) to anchor the seating surface (20) in deployed position on the vehicle structure.

10. Motor vehicle as in any of the preceding claims, **characterized in that** the seat back (10) is mobile between its normal position of use and a stow-away position in the floor of the vehicle.

## Patentansprüche

1. Kraftfahrzeug, umfassend einen Sitz (1), ausgestattet mit einer Rückenlehne (10), die normal in einer vertikalen oder sich der Vertikalen annährenden Nutzungsstellung angeordnet ist, einer Sitzfläche (20), die in Bezug zur Rückenlehne (10) um eine quer verlaufende Schwenkachse (30) schwenkbar angebracht ist, und Mitteln (40), um die Sitzfläche rotierend um die Schwenkachse (30) zu betätigen, **dadurch gekennzeichnet, dass** die Betätigungsmittel (40) ein Betätigungsorgan (41) umfassen, das über der Sitzfläche (20) um eine quer verlaufende Gelenkachse der Sitzfläche (42) schwenkbar angebracht ist, wobei das Betätigungsorgan (41) in Bezug auf die Rückenlehne (10) um eine quer verlaufende Gelenkachse der Rückenlehne (43) schwenkbar angebracht ist und in Bezug zu dieser Rückenlehne gleitend angebracht ist, wobei die Rückenlehne (10) mindestens einen länglichen Schlitz (11) umfasst, wobei die Gelenkachse der Rückenlehne (43) in diesem Schlitz (11) gleitet, und **dadurch**, dass, wenn sich die Sitzfläche (20) in ihrer ausgeklappten Stellung befindet, sich die Gelenkachse der Sitzfläche (42) relativ niedriger und relativ näher zum Schlitz (11) befindet als die Schwenkachse (30).

2. Kraftfahrzeug nach Anspruch 1, **dadurch gekennzeichnet, dass** die Sitzfläche (20) um die Schwenkachse (30) herum rotierend beweglich ist zwischen einer ausgeklappten Stellung, die von der Rückenlehne (10) relativ entfernter ist, und einer eingeklappten Stellung näher zur Rückenlehne (10), wobei die Gelenkachse der Rückenlehne (43) an ein erstes Ende (111) des Schlitzes (11) anschlägt, wenn die Sitzfläche (20) ihre ausgeklappte Stellung einnimmt, und ein zweites Ende (112) des Schlitzes (11) belegt, wenn die Sitzfläche (20) ihre eingeklappte Stellung einnimmt.

3. Kraftfahrzeug nach Anspruch 2, **dadurch gekennzeichnet, dass** die Rückenlehne (10) mindestens eine Armierungsstange (12) umfasst, die senkrecht oder leicht zur Senkrechten geneigt ist, wenn die Rückenlehne (10) in normaler Stellung ist, wobei der Schlitz (11) in die Stange (12) eingearbeitet ist und sich in Längsrichtung der Stange (12) erstreckt.

4. Kraftfahrzeug nach Anspruch 3, **dadurch gekennzeichnet, dass** sich das erste Ende (111) des Schlitzes (11) relativ über dem zweiten Ende (112) befindet.

5. Kraftfahrzeug nach einem der Ansprüche 2 bis 4, **dadurch gekennzeichnet, dass** das Betätigungsorgan (41) eine starre, quer verlaufende dünne Platte ist.

6. Kraftfahrzeug nach Anspruch 5, **dadurch gekennzeichnet, dass** die Platte (41) einen quer verlaufenden hinteren Teil (411) und einen quer verlaufenden vorderen Teil (412) umfasst, der mit dem hinteren Teil (411) verbunden ist, wobei sich der hintere Teil (412) in der ausgeklappten Stellung der Sitzfläche (20) parallel zur Armierungsstange (12) erstreckt.

7. Kraftfahrzeug nach Anspruch 6, **dadurch gekennzeichnet, dass** die vorderen und hinteren Teile (412, 411) gegenseitig einen Winkel bilden, der derart ist, dass sich der vordere Teil (412) parallel zu einer hinteren Fläche (24) der Sitzfläche (20) erstreckt, wenn diese in eingeklappter Stellung ist.

8. Kraftfahrzeug nach einem der Ansprüche 2 bis 7, **dadurch gekennzeichnet, dass** die Betätigungsmittel (40) ein Organ (44) umfassen, welches die Schwenkbewegung der Sitzfläche (20) von ihrer ausgeklappten Stellung in ihre eingeklappte Stellung unterstützt.

9. Kraftfahrzeug nach einem der Ansprüche 2 bis 8, **dadurch gekennzeichnet, dass** der Sitz (1) ein lösbares Organ (50) zur Verankerung der Sitzfläche (20) in ausgeklappter Stellung auf der Fahrzeugstruktur umfasst.

10. Kraftfahrzeug nach einem der vorangehenden Ansprüche, **dadurch gekennzeichnet, dass** die Rückenlehne zwischen ihrer normalen Nutzungsstellung und einer Verstaustellung im Boden des Fahrzeugs beweglich ist.
